# EUROPEAN PATENT APPLICATION

(11) **EP 3 029 561 A1**
(43) Date of publication of application: **08.06.2016**
(21) Application number: 15197631.3
(22) Date of filing: 02.12.2015
(51) Int. Cl.: G06F 3/0488, G06F 1/16, G06F 1/32

(54) **IMAGE DISPLAY CONTROL DEVICE**

(30) Priority: 05.12.2014 JP 2014247404
(71) Applicant: Digital Electronics Corporation, Osaka 541-0041 (JP)
(72) Inventor: OSAMU, Keiya, Osaka, Osaka 541-0041 (JP)
(74) Representative: Cabinet Plasseraud

(57) **Abstract**

A PC (1) includes: a desktop display management section (11) causing a display device (20) to display, among desktops, a main or sub desktop by switching between these desktops, the sub desktop being associated with the main desktop; and an application program execution process section (12) executing application programs and displaying images on the main and sub desktops, the images being generated by execution of the application programs, respectively. The desktop display management section (11) switches the main desktop to the sub desktop by a start instruction (C1) to start the application program of the image on the sub desktop.

## Description

### Technical Field

The present invention relates to an image display control device for displaying images of various application programs on a plurality of desktops.

### Background Art

In response to execution of an application program, computer equipment generates and displays an image in, e.g., a window when needed. In a case where a plurality of application programs is running images of the application programs are displayed at the same time.

Among these images, typically, only a front-most image can be fully displayed. This is because that these images are partially or fully overlapped with each other, since an area of a display screen is limited. Under such a circumstance, the application programs cause collision by trying to display their corresponding images in a front-most face, with the result that a desired image is not displayed in the front-most face in some cases. Further, in a case where each of the images is shifted from another one of the images by a space only enough to display its close button, an operational error is likely to happen. That is, when a user wants to end a certain application program, the user erroneously operates a close button displayed on an image of another application program which is not the certain application program, so as to end the application program which is not the certain application program.

In order to overcome such inconvenience, it is considered that the images of the application programs are displayed on respective different desktops by use of a technique of a virtual desktop. For example, Patent Literature 1 discloses a technique for allowing selection of a virtual image (virtual desktop) on which a window for an application program is to be displayed so that the window is displayed on the selected virtual image.

### Citation List

### Patent Literature

### Patent Literature 1

Japanese Patent Application Publication, *Tokukai,* No. 2012-22699 A (Publication Date: February 2, 2012)

### Summary of Invention

### Technical Problem

However, the above-described technique requires the user to carry out a troublesome operation of selecting the virtual image. In detail, for example, in order to start a second application program related to a first application program which is executed while a certain desktop is displayed, the user is required to (i) start the second application program and (ii) select a desktop on which an image of the second application program is to be displayed.

The present invention is made to solve the above problems, and an object of the present invention is to display, with a simple operation, images generated as a result of execution of a plurality of application programs, on respective different desktops.

### Solution to Problem

In order to attain the object, an image display control device of the present invention includes: a desktop display switching section for causing a display device to display, of a plurality of desktops, a first desktop or a second desktop by switching between the first desktop and the second desktop, the second desktop being associated with the first desktop; and an application program execution processing section for (i) executing a first application program for the first desktop and a second application program for the second desktop and (ii) displaying a first image on the first desktop and a second image on the second desktop, the first and second images being generated in response to execution of the first and second application programs, respectively, the desktop display switching section switching the first desktop to the second desktop in accordance with a selection instruction to select the second application program of the second image displayed on the second desktop.

In order to attain the above object, another image display control device of the present invention causes a liquid crystal display device to display an image generated in response to execution of an application program, the liquid crystal display device including (i) a liquid crystal display panel provided with a backlight and (ii) a touch panel stacked on the liquid crystal display panel, the image display control device, including: a desktop display switching section for switching, of a plurality of desktops, a first desktop to a second desktop which is associated with the first desktop and displaying the second desktop, in response to turning-off of the backlight, the turning-off occurring in a case where the touch panel is not touched for a certain time period; a screen-saver display control section for causing the second desktop to display a screen-saver image; and a backlight control section for recognizing, in a case where the touch panel is touched while the backlight is off and the screen-saver image is displayed, the touching as an instruction to turn on the backlight.

### Advantageous Effects of Invention

The present invention yields an effect that, with a simple operation, images of a plurality of application programs are able to be displayed on respective different desktops.

### Brief Description of Drawings

Fig. 1 is a block diagram illustrating a configuration of a computer system according to each of Embodiments 1 and 3 of the present invention.
Fig. 2 is a flow chart illustrating an operation of the computer system illustrated in Fig. 1 as to how desktops are switched from one to another and an execution image of an application program is displayed.
Fig. 3 is a view illustrating how execution images of different application programs are displayed on respective different desktops according to the computer system illustrated in Fig. 1.
Fig. 4 is a block diagram illustrating a configuration of a computer system according to each of Embodiments 2 and 3 of the present invention.
Fig. 5 is a flow chart illustrating how the computer system illustrated in Fig. 4 switches desktops from one to another and displays an execution image of an application program.
Fig. 6 is a view illustrating how execution images of different application programs are displayed on respective different desktops according to the computer system illustrated in Fig. 4.

### Description of Embodiments

### [Embodiment 1]

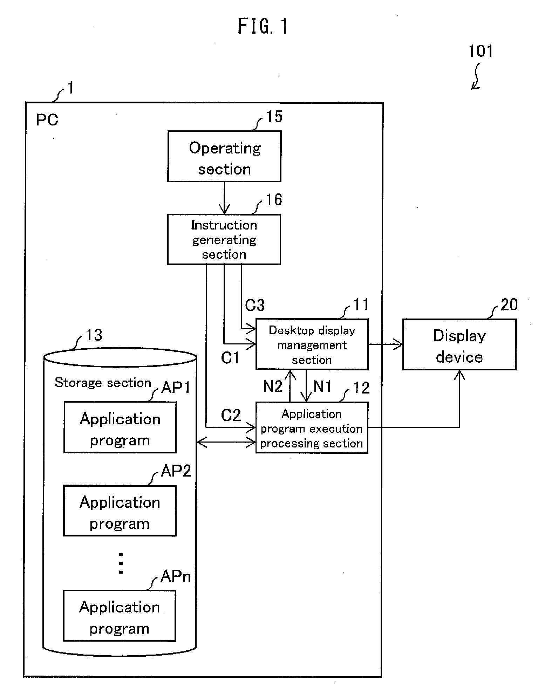

The following descriptions discuss Embodiment 1 of the present invention, with reference to Fig. 1 through Fig. 3.

Fig. 1 is a block diagram illustrating a configuration of a computer system 101 of Embodiment 1.

The computer system 101 includes a personal computer (PC) 1 (image display control device) and a display device 20 for displaying an image generated by the PC 1 (see Fig. 1).

The display device 20 displays the image generated by the PC 1, and includes a liquid crystal display device, an organic EL display device, and the like. Further, the display device 20 may include a touch panel for allowing a user to carry out an operation and input by touching a display surface of the display device 20. The touch panel is provided so as to be stacked on the display surface, and may be any of various touch panels, such as a capacitance touch panel and a resistance film system touch panel.

The PC 1 is a general-purpose computer which includes a CPU, a memory, a storage device (e.g., HDD and/or SSD), a communications interface, and the like, and in which an Operating System (OS) is installed. The PC 1 executes an application program. The PC 1 executes a dedicated application program to realize a virtual desktop environment in which a plurality of desktops is available. The desktop is a basic image on which operations such as starting or ending of an application program and works on an opened file are carried out.

In the following descriptions, a mainly displayed desktop is called a main desktop (first desktop), and an application program executed while the main desktop is displayed is called a main application program (first application program). For example, the main desktop may be a desktop which is predetermined to be displayed upon starting of the OS (i.e., the PC 1), or may be another desktop which is not such a desktop. The another main desktop which is not as those displayed upon starting of the PC 1 may be a desktop newly designated by a user after the PC 1 is started. In either case, a particular one (1) desktop is typically set as the main desktop. In the following descriptions, of desktops other than the main desktop, at least one desktop associated with the main desktop is called a sub desktop (second desktop). Further, an application program which is executed while the sub desktop is displayed and which is associated with the sub desktop is called a sub application program (second application program).

The PC 1 includes (i) a desktop display management section 11 (a display switching section for switching between first and second desktops) for managing displays of a plurality of desktops, (ii) an application program execution processing section 12 for executing an application program, (iii) a storage section 13 for storing an application program to be executed by the application program execution processing section 12. Further, the PC 1 includes (i) an operating section 15 for accepting an operation carried out by an operator and (ii) an instruction generating section 16 for generating, in accordance with the operation accepted through the operating section 15, a start instruction C1, an end instruction C2, and a switching instruction C3 (these instructions will be described later). The operating section 15 can accept an operation made through the earlier described touch panel or through any of other input devices (e.g., a keyboard or a mouse). The instruction generating section 16 can utilize, as its function, an instruction generating function of the OS.

The details of the switching instruction C3 will be described in the later-described modification.

The desktop display management section 11 recognizes a currently displayed desktop among a plurality of desktops including the main desktop. Further, if the desktop display management section 11 receives a start instruction C1 to start a sub application program (a selection instruction to select a sub application program to be started) in a case where the currently displayed desktop is the main desktop, the desktop display management section 11 switches, of a plurality of sub desktops, the main desktop to one (1) sub desktop (the sub desktop associated with the selected application program), and causes the display device 20 to display the one (1) sub desktop. The start instruction C1 is generated by the instruction generating section 16 in accordance with the operation carried out by the operator through the operating section 15. Further, the desktop display management section 11 notifies the application program execution processing section 12, through a switching notice N1, that the main desktop has been switched to the sub desktop. Upon receipt of, from the application program execution processing section 12, an end notice N2 which notifies that the sub application program has been ended, the desktop display management section 11 switches the sub desktop to the main desktop, and causes the display device 20 to display the main desktop.

The application program execution processing section 12 executes at least one of application programs AP1 to APn stored (saved) in the storage section 13, and controls start and end of the application programs AP1 to APn. In detail, upon receipt of the switching notice N1 from the desktop display management section 11, the application program execution processing section 12 executes, among the application programs AP1 to APn, a sub application program associated with the sub desktop, and causes the sub desktop to display an image (execution image) generated in the process of the execution of the sub application program. The execution image is an image changed as needed so as to reflect, to the execution image, a result of a process carried out on the sub application program in response to a user's operation or an externally-given instruction. Further, upon receipt of the end instruction C2 to end the sub application program which is in execution, the application program execution processing section 12 ends the sub application program, and notifies the desktop display management section 11, through the end notice N2, that the sub application program has been ended. The end instruction C2 is issued by the instruction generating section 16 in accordance with an end operation (e.g., touching a close button to end the application program) carried out by an operator through the operating section 15.

The storage section 13 is constituted by the storage devices, and stores the various application programs AP1 to APn.

The following descriptions discuss how displays of desktops of the computer system 101 configured as above are switched from one to another.

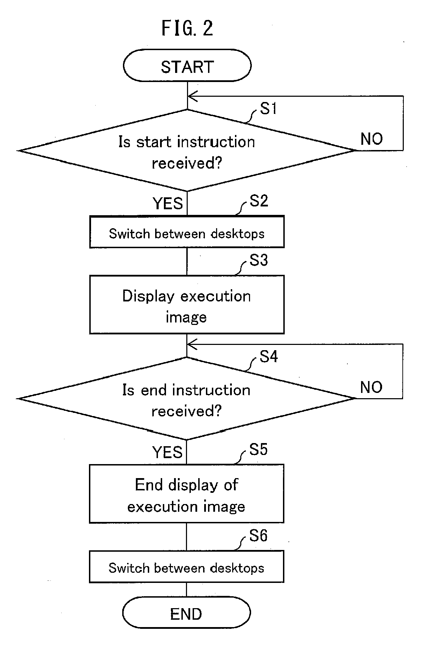

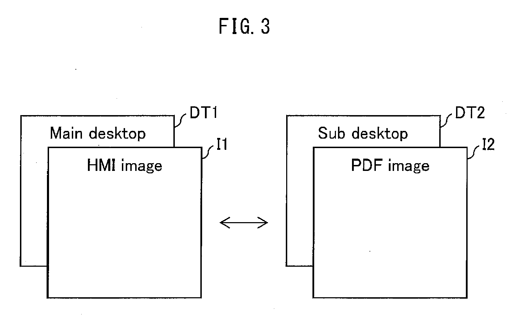

Fig. 2 is a flow chart illustrating an operation of the computer system 101 as to how desktops are switched from one to another and an execution image of an application program is displayed. Further, Fig. 3 illustrates how execution images of different application programs are displayed on respective different desktops according to the computer system 101.

Descriptions made herein deals with an example where a main desktop DT1 displays a Human Machine Interface (HMI) image I1 (first image), which is an execution image of an HMI application program, whereas a sub desktop DT2 displays a Portable Document Format (PDF) image 12 (second image), which is an execution image of a PDF viewer serving as the sub application program (see Fig. 3).

The HMI application program serves to operate an HMI device, such as a programmable display. The PDF viewer is an application program for displaying a PDF document.

The HMI device serves as an interface device to which control equipment, such as Programmable Logic Controller (PLC), and/or a target device is connected so that the HMI device can (i) monitor an operation of the control equipment and/or the target device and/or (ii) transmit a control instruction to the control equipment or the target device.

As illustrated in the left side of Fig. 3, the main desktop DT1 displays the HMI image I1. For convenience, in the left side of Fig. 3, the HMI image I1 is illustrated as being partially overlapped to and slightly shifted from the main desktop DT1. However, in practice, the HMI image I1 is displayed in the main desktop DT1 (i) as a smaller image than the main desktop DT1 or (ii) as an image having the same size as that of the main desktop DT1 and covering the main desktop DT1. Similarly, for convenience, in the right side of Fig. 3, the PDF image 12 is illustrated as being partially overlapped to and slightly shifted from the sub desktop DT2. However, in practice, the PDF image 12 is displayed in the sub desktop DT2 (i) as a smaller image than the sub desktop DT2 or (ii) as an image having the same size as that of the sub desktop DT2 and covering the sub desktop DT2.

In the state shown in the left side of Fig. 3, the desktop display management section 11 determines whether or not the desktop display management section 11 has received the start instruction C1 (step S1) (see Fig. 2). If the desktop display management section 11 determines that the desktop display management section 11 has received the start instruction C1 (YES), the desktop display management section 11 switches, from the main desktop DT1 to the sub desktop DT2 (step S2), the desktop displayed by the display device 20 (see Fig. 2). As a result, the display device 20 is caused to display the sub desktop DT2 illustrated in the right side of Fig. 3 instead of the main desktop DT1, as described below.

Note that, the processes of the steps S1 and S2 may be carried out in a reverse order, or may be carried out at the same time.

Upon receipt of the start instruction C1 in the step S2, the desktop display management section 11 selects, among a plurality of desktops, the sub desktop DT2 associated with a sub application program which is specified by the start instruction C1 and which is to be started, and switches a desktop to the sub desktop DT2 and displays the sub desktop DT2. For example, the start instruction C1 is generated by the instruction generating section 16 in accordance with an operation signal generated by the operating section 15 in response to an operation carried out on a button for starting the PDV viewer, in a case where such a button is included in the HMI image.

In a state where the sub desktop DT2 is displayed, i.e., in a state where the application program execution processing section 12 receives the switching notice N1 from the desktop display management section 11, the application program execution processing section 12 starts the sub application program, i.e., the PDF viewer, and causes the sub desktop DT2 to display the PDF image 12, which is an execution image of the PDF viewer, as illustrated in the right side of Fig. 3 (step S3).

The application program execution processing section 12 determines whether or not the application program execution processing section 12 has received the end instruction C2 (step S4). If the application program execution processing section 12 determines that the application program execution processing section 12 has received the end instruction C2 (YES), the application program execution processing section 12 ends the sub application program and ends the display of the execution image on the sub desktop DT2 (step S5). That is, the execution image of the sub application program comes not to be displayed on the sub desktop DT2.

Upon receipt of, from the application program execution processing section 12, the end notice N2 notifying that the PDF viewer has been ended, the desktop display management section 11 switches the display from the sub desktop DT2 to the main desktop DT1 (step S6). Accordingly, the process returns to a state in which the HMI image I1 is displayed on the main desktop DT1 as illustrated in the left side of Fig. 3.

Further, in Embodiment 1, the main desktop DT1 is started upon starting of the OS. However, the sub desktop DT2 is not necessarily started upon starting of the OS. Alternatively, the sub desktop DT2 may be started upon starting of the PDF viewer. However, the starting of the sub desktop DT2 causes a delay in execution of the PDF viewer. Therefore, it is preferable to start both of the main desktop DT1 and the sub desktop DT2 when starting the OS. This also applies to Embodiment 2, which will be described later.

As described above, the computer system 101 of Embodiment 1 is configured as follows. That is, upon receipt of the start instruction C1, the desktop display management section 11 switches the main desktop DT1 to the sub desktop DT2 and causes the display device 20 to display the sub desktop DT2, and the application program execution processing section 12 executes the sub application program and causes the sub desktop DT2 to display the execution image of the sub application program. Further, upon receipt of the end instruction C2, the application program execution processing section 12 ends the sub application program. In response to this, the desktop display management section 11 switches the sub desktop DT2 to the main desktop DT1 and causes the display device 20 to display the main desktop DT1.

Consequently, the execution image of the main application program is displayed on the main desktop DT1, and the execution image of the sub application program is displayed on the sub desktop DT2, which is not the main desktop DT1. Such an operation prevents an inconvenience which has been caused in a case where plural application programs are executed on a single desktop. That is, the operation as above prevents an inconvenience that application programs cause collision by trying to display their execution images in a front-most face. Further, the operation as above also prevents an inconvenience that a user erroneously ends an application program which does not need to be ended.

Thus, the operation as above makes it possible to carry out a process as below without any inconvenience. That is, for example in the case of Fig. 3, while the HMI application program is in execution, a document such as a manual is displayed as the PDF image 12 as needed. Then, after the user finishes the use of the PDF image 12, the HMI image I1, which was displayed before the PDF image 12, is displayed again.

Further, the operation as above enables the following operation. That is, merely by an operation to give the start instruction C1 while the main desktop DT1 is displayed, the execution image of the sub application program started in response to the operation is displayed on the sub desktop DT2 thus switched to be displayed. Meanwhile, merely by an operation to give the end instruction C2, the sub application program is ended, and the process returns to the original state in which the execution image of the main application program is displayed on the main desktop DT1 thus switched to be displayed. Accordingly, it is possible to switch the desktops from one to another without carrying out an operation to switch the desktops. Thus, it is possible to display, with a simple operation, images of a plurality of application programs on respective different desktops.

### <Modification>

Next, a modification of the present embodiment is described below.

In the above-described processes, the main desktop DT1 is switched to the sub desktop DT2 in accordance with the start instruction C1, and the sub desktop DT2 is switched to the main desktop DT1 in accordance with the end notice N2. Meanwhile, the present modification deals with an example in which switching between the main desktop DT1 and the sub desktop DT2 is carried out in accordance with the switching instruction C3 in a state where the sub application program (PDF viewer) is already started and running for the sub desktop DT2.

Upon receipt of, from the instruction generating section 16, the switching instruction C3 to switch between desktops, the desktop display management section 11 carries out switching between the main desktop and the sub desktop. In the present modification, the desktop display management section 11 receives the switching instruction C3 and then carries out switching between the main desktop and the sub desktop, only in a case where the sub application program is already started and running.

An operation to generate the switching instruction C3 may be (i) an operation of selecting (using), on the main desktop DT1 which is displayed, an application program already started and running for the sub desktop DT2 or (ii) an operation of minimizing a window of the sub application program for the sub desktop DT2 and temporarily ending the display of the image of the sub application program. However, an operation to generate the switching instruction C3 is not limited to these operations.

With reference to the flow chart of Fig. 2, instead of the process of step S1 in which the desktop display management section 11 determines whether or not the desktop display management section 11 has received the start instruction C1, the desktop display management section 11 determines whether or not the desktop display management section 11 has received the switching instruction C3. In this case, in order to switch the desktops from one to another, the switching instruction C3 is used instead of the start instruction C1. This is because the sub application program is already started and running. Accordingly, upon receipt of the switching instruction C3, the desktop display management section 11 switches, from the main desktop DT1 to the sub desktop DT2, the desktop displayed by the display device 20 in step S2. In this case, because the PDF viewer is already started and running for the sub desktop DT2, the PDF image 12 is displayed on the sub desktop DT2 at the same time that the main desktop DT1 is switched to the sub desktop DT2.

Further, instead of the process in step S4 in which the application program execution processing section 12 determines whether or not the application program execution processing section 12 has received the end instruction C2, the desktop display management section 11 determines whether or not the desktop display management section 11 has received the switching instruction C3. Since the desktops are switched from one to another with the sub application program being always in a running state, it is not necessary to end the sub application program. Therefore, the application program execution processing section 12 does not carry out the process in step S5 of ending the display of the execution image on the sub desktop DT2. Thus, in order to switch the desktops from one to another, the switching instruction C3 is used instead of the end notice N2. Accordingly, upon receipt of the switching instruction C3, the desktop display management section 11 switches, from the sub desktop DT2 to the main desktop DT1, the desktop displayed by the display device 20 in step S6.

As described above, in the present modification, switching between the main desktop DT1 and the sub desktop DT2 is carried out while the sub application program is running for the sub desktop DT2, and therefore time periods required to start and end the sub application program are unnecessary. This allows instantaneous switching between (i) the display of the execution image of the main application program and (ii) the display of the execution image of the sub application program. This is effective in a case where the displays of the execution images are frequently switched. Further, this allows an operator to switch the displayed desktop to a desktop on which an application program desired by the operator is running, merely by carrying out an operation to give the selection instruction, i.e., the switching instruction C3 via the operating section 15 while feeling as if he/she selected the application program.

### [Embodiment 2]

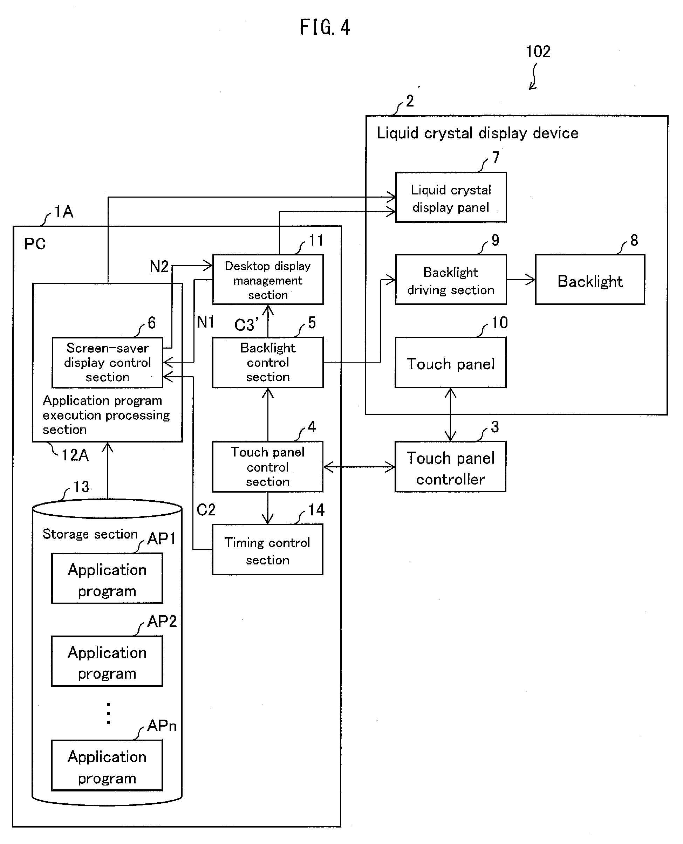

Another embodiment of the present invention is described below with reference to Fig. 4 to Fig. 6. Note that, in Embodiment 2, components having the same functions as those explained in Embodiment 1 are given the same reference signs as those of Embodiment 1, and descriptions for the components are omitted here.

Note that, in Embodiment 2, explanations are given while assuming that a touch panel 10 is touched by a finger. However, needless to say, the touch panel 10 may be touched alternatively by any of other indicators (e.g., a pen) which are not the finger.

In Embodiment 1, the descriptions have been made by taking the example in which the execution image of the HMI application program (main application program) and the execution image of the PDF viewer (sub application program) are displayed on different desktops respectively. On the other hand, in Embodiment 2, the descriptions will be made by taking an example in which an execution image of an HMI application program (main application program) and an execution image of screen-saver (sub application program) are displayed on different desktops respectively.

Fig. 4 is a block diagram illustrating a configuration of a computer system 102 of Embodiment 2.

The computer system 102 includes (i) a personal computer (PC) 1A (image display control device), (ii) a liquid crystal display device 2 (display device) which serves as a display device and an input device of the PC 1A, and (iii) a touch panel controller 3 for controlling the touch panel 10 of the liquid crystal display device 2 (see Fig. 4).

The computer system 102 of Embodiment 2 operates in a usual mode or a power saving mode. The usual mode refers to an operation mode in which a backlight 8 (described later) is on (illuminated) while an operation state of a liquid crystal display panel 7 (described later) is maintained. In contrast, the power saving mode refers to an operation mode in which the backlight 8 is off (not illuminated) while an operation state of the liquid crystal display panel 7 is maintained.

In Embodiment 2, the liquid crystal display device 2 and the touch panel controller 3 are provided separately from the PC 1A. However, the configuration of Embodiment 2 is not limited to this. Alternatively, the liquid crystal display device 2 and the touch panel controller 3 may be provided so as to be integrated with the PC 1A.

First, the following descriptions discuss the liquid crystal display device 2 and the touch panel controller 3.

The liquid crystal display device 2 includes, in order to display an image generated by the PC 1A, the liquid crystal display panel 7, the backlight 8 for emitting light from behind the liquid crystal display panel 7, and a backlight driving section 9 for driving the backlight 8. The liquid crystal display panel 7 includes the backlight 8 as a part thereof. The backlight 8 includes a cold-cathode tube and an LED, and is turned on by a drive current supplied from the backlight driving section 9. The backlight driving section 9 supplies the drive current to the backlight 8 in accordance with a turn-on instruction from a backlight control section 5 (described later). Meanwhile, the backlight driving section 9 stops the supply of the drive current to the backlight 8 in accordance with a turn-off instruction from the backlight control section 5. Further, the backlight driving section 9 variably controls the drive current to be supplied to the backlight 8 so as to adjust brightness.

The liquid crystal display device 2 includes a touch panel 10 so as to allow a user to carry out an operation and an input by touching the liquid crystal display panel 7. The touch panel 10 is provided so as to be stacked on the liquid crystal display panel 7. The touch panel 10 is constituted by any of various touch panels such as the capacitance touch panel and the resistance film system touch panel.

The touch panel controller 3 drives the touch panel 10 in accordance with an instruction from a touch panel control section 4 (described later). Further, the touch panel controller 3 outputs, to the touch panel control section 4, touching (e.g., coordinates indicative of a touch position) detected by the touch panel 10, as detected data. The touch panel controller 3 is constituted by a general-purpose controller.

The PC 1A (i) is a general-purpose computer which has the same function as that of the PC 1 of Embodiment 1, (ii) displays a main desktop upon starting of the OS, and (iii) realizes a virtual desktop environment in which a plurality of desktops is available. Further, as with the PC 1, the PC 1A includes the desktop display management section 11 and the storage section 13. Furthermore, the PC 1A includes an application program execution processing section 12A (instead of the application program execution processing section 12) and a timing control section 14. In addition, the PC 1A includes (i) the touch panel control section 4 for controlling driving of the touch panel 10 and (ii) the backlight control section 5 for controlling turning on/off of the backlight 8. Still further, the application program execution processing section 12A includes a screen-saver display control section 6 for causing the liquid crystal display device 2 to display a screen-saver image by executing the screen-saver (screen-saver program) as an application program.

The touch panel control section 4 generates a touch-on signal and a touch-off signal in accordance with the detected data from the touch panel controller 3. The touch-on signal is outputted when touching is started, i.e., when a finger touches the touch panel. Meanwhile, the touch-off signal is outputted when the touching is released, i.e., when the finger takes off the touch panel 10. The touch-on signal or the touch-off signal is transmitted to the backlight control section 5 and the timing control section 14.

If a time period elapsed from the release of the touching to the touch panel 10 (i.e., from reception of the touch-off signal) or a time period elapsed with the touch panel 10 not touched since the starting of the liquid crystal display device 2 reaches a certain time period (i.e., a time period set by a user), that is, if the touch panel is not touched and therefore neither operation nor input is made to the PC 1A for a certain time period, the backlight control section 5 transmits to the backlight driving section 9 the turn-off instruction (turn-off signal) for turning off the backlight 8, for the purpose of transferring to the power saving mode. Meanwhile, upon receipt of the touch-on signal in the power saving mode, the backlight control section 5 transmits to the backlight driving section 9 a turn-on instruction (turn-on signal) for turning on the backlight, for the purpose of returning to the usual mode. Furthermore, in a case where the backlight 8 is on in the usual mode, the backlight control section 5 transmits to the backlight driving section 9 a brightness control signal for adjustment of brightness in response to an instruction by a user. Note that the backlight control section 5 is typically realized by the function of the OS. Alternatively, however, the backlight control section 5 can be provided independently from the function of the OS.

In Embodiment 2, upon receipt of the turn-off signal from the backlight control section 5 as a switching instruction C3' (selection instruction), the desktop display management section 11 switches the main desktop to the sub desktop and causes the liquid crystal display panel 7 to display the sub desktop, and also notifies the screen-saver display control section 6 that the main desktop has been switched to the sub desktop. Further, upon receipt of, from the screen-saver display control section 6, the notice that the screen-saver is ended, the desktop display management section 11 switches the sub desktop to the main desktop, and causes the liquid crystal display panel 7 to display the main desktop.

The desktop display management section 11 in Example 2 is different from the desktop display management section 11 in the earlier-described modification in the following point. That is, the desktop display management section 11 in Example 2 switches the desktops from one to another upon receipt of the switching instruction C3', which is not the switching instruction C3, while the sub application program (screen-saver) is not running. As described in detail later, the switching instruction C3' serves as a trigger not only for switching the desktops but also for starting the screen-saver.

The timing control section 14 controls timing at which the screen-saver display control section 6 ends the display of the screen-saver image. Specifically, the timing control section 14 outputs the display end signal, if a state in which the finger is off from the touch panel 10 (i.e., the touch panel 10 is not touched again) has continued for a certain time period since the touch-off signal was transmitted to the timing control section 14 from the touch panel control section 4 after the backlight 8 was changed from a turning-off state in the power saving mode to a turning-on state in response to the touch-on signal, i.e., if a time period from reception of the touch-off signal to reception of the next touch-on signal exceeds a certain time period.

Note that the timing control section 14 may be incorporated into the touch panel control section 4 as a part thereof, or alternatively may be incorporated into the screen-saver display control section 6 as a part thereof.

The screen-saver display control section 6 is included in the application program execution processing section 12A, and controls displaying of the screen-saver image. Specifically, upon receipt of the switching notice N1 from the desktop display management section 11, the screen-saver display control section 6 starts the screen-saver. Meanwhile, upon receipt of the display end signal as the end instruction C2 from the timing control section 14, the screen-saver display control section 6 ends the screen-saver, and transmits, to the desktop display management section 11, the end notice N2 notifying that the screen-saver has ended.

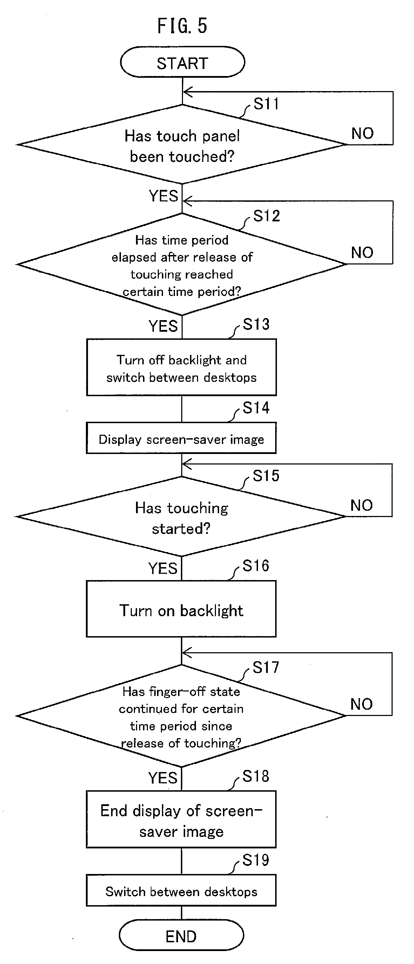

With reference to Figs. 4 and 5, the following descriptions discuss (i) how the computer system 102 configured as above is transferred to the power saving mode and (ii) how the computer system 102 is returned to the usual mode.

Fig. 5 is a flow chart illustrating how the computer system 102 switches the desktops from one to another and displays the execution image of the application program. A series of processes shown in the flow chart in Fig. 5 is started in a state where the main desktop is displayed as described later.

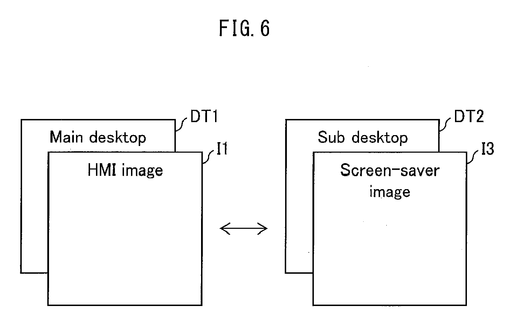

Fig. 6 is a view illustrating how execution images of different application programs are displayed on respective different desktops according to the computer system 102. The left side of Fig. 6 shows the main desktop DT1 displaying the HMI image of the HMI application program which is already started, whereas the right side of Fig. 6 shows the sub desktop DT2 displaying the screen-saver image 13 of the screen-saver which is already started. For convenience, in the left side of Fig. 6, the HMI image I1 is illustrated as being partially overlapped to and slightly shifted from the main desktop DT1. However, in practice, the HMI image I1 is displayed in the main desktop DT1 (i) as a smaller image than the main desktop DT1 or (ii) as an image having the same size as that of the main desktop DT1 and covering the main desktop DT1. Similarly, for convenience, in the right side of Fig. 6, the screen-saver image 13 is illustrated as being partially overlapped to and slightly shifted from the sub desktop DT2. However, in practice, the screen-saver image 13 is displayed in the sub desktop DT2 as an image having the same size as that of the sub desktop DT2 and covering the sub desktop DT2.

The following descriptions discuss an operation after the liquid crystal display device 2 is started up and the touch panel is touched at least one time. In other words, until the touch panel is touched for the first time after the liquid crystal display device 2 is started, a process is carried out which determines whether or not a time period elapsed with the touch panel 10 not touched since the starting of the liquid crystal display device 2 reaches a certain time period (this process is not illustrated). Further, as the screen-saver image 13, a solid black screen-saver image is displayed. Furthermore, except for some application programs for notifying an error, any application programs other than the screen-saver do not operate for the sub desktop DT2. Namely, except for execution images of the some application programs for notifying an error, any images other than the screen-saver image 13 are not displayed on the sub desktop DT2.

First, as illustrated in the left side of Fig. 6, the main desktop DT1 displays the HMI image I1. Further, the liquid crystal display device 2 is operating in the usual mode. In this state, the touch panel control section 4 determines whether or not the touch panel 10 is touched (step S11) (see Fig. 5). In a case where the touch panel control section 4 determines that the touch panel is touched in step S11, the backlight control section 5 determines, in accordance with the touch-off signal from the touch panel control section 4, whether or not a time period elapsed from release of the touching, i.e., a time period elapsed since the finger took off the touch panel 10 reaches a certain time period (step S12). In this process, the backlight control section 5 starts measuring a time period upon reception of the touch-off signal, and continues clocking until the elapsed time period reaches the certain time period.

In a case where the backlight control section 5 determines, in step S12, that the certain time period has elapsed since the touching was released, (i) the backlight 8 is turned off and (ii) the desktop display management section 11 receives the turn-off signal from the backlight control section 5 as the switching instruction C3' and switches the displayed desktop from the main desktop DT1 to the sub desktop DT2 (step S13). The turning-off of the backlight 8 is carried out as follows. First, the backlight control section 5 outputs the turn-off signal to the backlight driving section 9. Then, upon reception of the turn-off signal, the backlight driving section 9 stops supplying the drive current to the backlight 8, so that the backlight 8 is turned off.

In a state where the sub desktop DT2, switched from the main desktop DT1, is displayed, i.e., in a state after reception of the switching notice N1 from the desktop display management section 11, the screen-saver display control section 6 starts the screen-saver and causes the sub desktop DT2 to display the screen-saver image 13, which is the execution image of the screen-saver, as illustrated in the right side of Fig. 6 (step S14). In order to display the screen-saver image, the screen-saver display control section 6, triggered by the switching notice N1 from the desktop display management section 11, outputs the screen-saver image to the liquid crystal display panel 7. As a matter of course, transmission of the switching notice N1 by the desktop display management section 11 is triggered by the desktop display management section 11's reception of the switching instruction C3'. In other words, the switching instruction C3' serves as a substantial trigger for starting the screen-saver.

Accordingly, transfer from the usual mode to the power saving mode is completed. In the power saving mode, the backlight 8 is off and the screen-saver image 13, which is solid black, is displayed.

Next, in the power saving mode, the touch panel control section 4 monitors touching to the touch panel 10 and determines whether or not touching to the touch panel is started (step S15). If the touch panel control section 4 generates the touch-on signal in accordance with the detected data from the touch panel controller 3 and determines that the touching to the touch panel is started in step S15, the backlight 8 is turned on (step S16). The turning-on of the backlight 8 is carried out as follows. The backlight control section 5 outputs a turn-on signal in accordance with the touch-on signal. Then, upon receipt of the turn-on signal, the backlight driving section 9 starts supplying the drive current to the backlight 8. As a result, the backlight 8 is turned on. In this manner, the touching to the touch panel 10 on which the screen-saver image is displayed is recognized as an instruction to turn on the backlight 8.

In this state, although the backlight 8 is on, the screen-saver image 13, which is solid black, is displayed on the liquid crystal display panel 7. Thus, the display screen is seen as a black screen for the user. Further, in the power saving mode, the touching is made for the screen-saver image 13. This is recognized as the instruction for turning on the backlight 8, as described above. Therefore, the touch panel control section 4 does not recognize this touching as touching to any other images behind the screen-saver image 13. In other words, the liquid crystal display panel 7 behaves as if touching to other images behind the screen-saver image 13 is prevented by the screen-saver image 13.

The timing control section 14 determines (step S17) whether or not a state where the finger is off from the touch panel 10 has continued for a certain time period since the touch-off signal was generated by the touch panel control section 4 in response to the release of the touching recognized by the touch panel control section 4 in the determination in step S15. In other words, the timing control section 14, triggered by the touch-off signal, starts measuring a time period, and monitors for output of the touch-on/touch-off signal from the touch panel control section 4. If the touch panel 10 is touched again (i.e., the touch-on signal is outputted) before the measured time period reaches the certain time period, the timing control section 14 ends measuring the time period. In such a case, as a matter of course, the measured time period does not reach the certain time period. If the finger takes off the touch panel 10 after that and thus the timing control section 14 receives the touch-off signal from the touch panel control section 4, the timing control section 14 starts measuring a time period again, triggered by the touch-off signal.

The certain time period is set to be 1 second, assuming a case where the user's finger unintentionally touches the touch panel 10 after the user takes his/her finger off the touch panel 10. However, the certain time period is not limited to 1 second, but may be set to any of other values.

If the timing control section 14 determines in step S17 that the state where the finger is off from the touch panel 10 has continued for the certain time period, the timing control section 14 outputs the display end signal to the screen-saver display control section 6. Upon receipt of the display end signal as the end instruction C2, the screen-saver display control section 6 ends the screen-saver and stops the output of the screen-saver image 13 to the liquid crystal display panel 7. Accordingly, the liquid crystal display panel 7 ends the display of the screen-saver image 13 (step S18).

Upon receipt, from the screen-saver display control section 6, the end notice N2 notifying that the screen-saver is ended, the desktop display management section 11 switches the display from the sub desktop DT2 to the main desktop DT1 (step S19). Accordingly, the process returns to a state in which the HMI image I1 is displayed on the main desktop DT1 as illustrated in the left side of Fig. 6.

Note that the processes of step S13 and step S14 can be carried out at the same time, or may be carried out in a reverse order.

As described above, the computer system 102 of the present embodiment is configured as follows. That is, upon receipt of the switching instruction C3', the desktop display management section 11 switches the main desktop DT1 to the sub desktop DT2 and causes the liquid crystal display device 2 to display the sub desktop DT2. Further, upon receipt of the switching notice N1, the application program execution processing section 12A executes the screen-saver and causes the sub desktop DT2 to display the screen-saver image 13, which is the execution image of the screen-saver. Furthermore, upon receipt of the end instruction C2 from the timing control section 14, the application program execution processing section 12A ends the screen-saver. Accordingly, the desktop display management section 11 receives the end notice N2, and then switches the sub desktop DT2 to the main desktop DT1 and causes the liquid crystal display device 2 to display the main desktop DT1.

Consequently, the HMI image I1 of the HMI application program, which is executed prior to the screen-saver, is displayed on the main desktop DT1, whereas the screen-saver image 13 of the screen-saver, which is executed in the power saving mode, is displayed on the sub desktop DT2, which is not the main desktop DT1. As with Embodiment 1, this prevents an inconvenience that plural application programs cause collision by trying to display their execution images in a front-most face. Further, the above configuration also prevents an inconvenience that a user erroneously ends the application program which does not need to be ended.

In the present embodiment, other application programs except for some application programs for notifying an error do not operate for the sub desktop DT2. Thus, in a case where the some application programs for notifying an error are not in operation, no collision occurs for display in a front-most face between execution images of the other application programs and the screen-saver image 13.

Further, in response merely to a state where the touch panel 10 is not touched for a certain time period while the main desktop DT1 is displayed, the backlight control section 5 transmits the switching instruction C3' (selection instruction) to the desktop display management section 11, and the main desktop DT1 is switched to the sub desktop DT2 in accordance with the switching instruction C3' (selection instruction). In response to the switching, the switching notice N1 is generated. In accordance with the switching notice N1, the screen-saver image 13 of the screen-saver thus started is displayed on the sub desktop DT2, which is displayed as a result of the switching. On the other hand, in a case where, in the poser saving mode, a state in which the touch panel 10 is not touched again has continued for a certain time period since the touch panel 10 was touched, the timing control section 14 transmits the end instruction C2 (display end signal) to the screen-saver display control section 6. Upon receipt of the end instruction C2, the screen-saver is ended. In accordance with the end notice N2 generated in response to the end of the screen-saver, the sub desktop DT2 is switched to the main desktop DT1, and the HMI image I1 is displayed on the main desktop DT1. Thus, the process returns to the original state. Accordingly, it is possible to switch the desktops from one to another without carrying out an operation for switching the desktops. Namely, starting a certain application program causes the displayed desktop to be switched to a certain desktop suitable to the certain application program (i.e., to a certain desktop for the certain application program). Therefore, it is possible to display, with a simple operation, images of a plurality of application programs on respective different desktops.

After the display of the screen-saver image 13 is ended, the HMI image I1 is displayed in a front-most face. Thereafter, touching to the touch panel 10 is recognized as an operation or an input for the HMI image I1 which is displayed. In this manner, transfer from the power saving mode to the usual mode is completed.

On the other hand, in a case where the backlight 8 is turned off, the screen-saver display control section 6 causes the liquid crystal display panel 7 to display the screen-saver image (step S14). Further, in a case where a state where the finger is off from the touch panel 10 has continued for a certain time period since the touching was released, the screen-saver display control section 6 causes the liquid crystal display panel 7 to end the display of the screen-saver image (step S18).

Meanwhile, the process of step S11 is not carried out until the liquid crystal display device 2 is touched for the first time after the OS is started. Further, instead of the process of step S12, a process is carried out which determines whether or not a time period elapsed with the liquid crystal display device 2 not touched since the start of the OS reaches a certain time period.

In the power saving mode, the main desktop DT1 for which the HMI application program is running is not selected, but the sub desktop DT2 for which the screen-saver is running is selected. Accordingly, the touching to the touch panel 10 on which the screen-saver image 13 is displayed is recognized by the backlight control section 5 as the instruction to turn on the backlight 8, and also is recognized by the screen-saver as an operation with respect to the screen-saver image 13. However, such touching is not recognized by the HMI application program. Therefore, it is possible to surely prevent the touching carried out in the power saving mode from causing an erroneous operation.

There are various kinds of OS allowing the screen-saver image to be displayed in a front-most face. However, many of such OSs cannot simultaneously execute display of a general screen-saver image and a power saving mode. Therefore, when transferring to the power saving mode, these OSs cancel the display of the screen-saver image. Thus, these OSs cannot display the general screen-saver image in the power saving mode. In order to deal with this, the present embodiment additionally provides the screen-saver image which can be displayed in the power saving mode.

Further, the present embodiment, which includes the screen-saver display control section 6 and the timing control section 14, allows the following operation. That is, if a state where the user's finger is off from the touch panel 10 has continued for a certain time period since the user took his/her finger off from the touch panel 10 after touching the touch panel 10 in order to transfer the operation mode from the power saving mode to the usual mode, the display of the screen-saver image is canceled. Thus, the display of the screen-saver image is not canceled even if chattering occurs instead of proper touching, the chattering being caused by, e.g., the finger touching the touch panel 10 several times in a short time by accident. In this manner, it is possible to prevent an erroneous operation.

The screen-saver image 13, which is additionally provided, is a solid black image. Thus, in a case where the operation mode is transferred from the usual mode to the power saving mode, the screen-saver image 13, which is solid black, is displayed with the backlight 8 turned off. Accordingly, when the display is switched from the sub desktop to the main desktop DT1, the user recognizes that the operation mode has been returned to the usual mode. As described earlier, in the present embodiment, cancel of the display of the screen-saver image 13 is not carried out at the same time that the touching is carried out in the power saving mode. Thus, since the screen-saver image 13 is solid black, the displayed screen is still black even if the display of the screen-saver image 13 is not canceled when the operation mode is returned to the usual mode during which the backlight 8 is on. Therefore, the power saving mode is appeared to the user to be continued.

Further, in the present embodiment, the power saving mode may be set in the same manner as that of a conventional computer system, and any special setting is not necessary therefor. For example, in a case where Windows (Registered Trademark) OS is used, the power saving mode may be set merely by a power saving setting in a control panel. Further, the computer system 102 may employ a general-purpose touch panel controller 3. Accordingly, the computer system 102 is able to prevent an erroneous operation caused through the touch panel 10 merely with the screen-saver display control section 6, the touch panel control section 4, and the timing control section 14, each of which is realized by software.

As well as a general PC, the PC 1A also accepts an operation carried out through any of other input devices such as a keyboard or a mouse, and is able to cancel display of the screen-saver image, which is displayed in the power saving mode.

In the present embodiment, the display of the screen-saver image 13 is ended, if a state where the finger is off from the touch panel 10 has continued for a certain time period after the release of the touching in the power saving mode, i.e., if the touch panel 10 is not touched again for a certain time period after the release of the touching in the power saving mode. However, the present embodiment is not limited to this. If it is not necessary to consider prevention of the chattering, the display of the screen-saver image 13 may be ended by the stop of the screen-saver display control section 6 when the touching is started (i.e., the finger touches the touch panel 10) in the power saving mode. In such a case, the screen-saver display control section 6 causes, in the earlier-described step S16, the liquid crystal display panel 7 to end the display of the screen-saver image 13 at the same time that the backlight 8 is turned on, without measuring a time period as described earlier (i.e., without carrying out the determination in step S17).

Further, in the present embodiment, the screen-saver image 13 is solid black in order not to give the user an uncomfortable feeling even when the display of the screen-saver image 13 is not ended at the same time that the touch panel 10 is touched in the power saving mode for returning to the usual mode. However, the color of the screen-saver image 13 is not limited to black, but may be any other colors.

Further, the description in the present embodiment has dealt with a configuration in which transfer between the usual mode and the power saving mode is carried out with use of the single liquid crystal display device 2. However, the present invention is applicable also to a configuration in which transfer between the usual mode and the power saving mode is carried out in the same manner with use of the liquid crystal display device 2 and another liquid crystal display device.

The present embodiment is applicable even to a multi-display system including a plurality of liquid crystal display devices. Such a system may be, for example, a configuration including a main liquid crystal display device 2 connected with DVI and another liquid crystal display device provided as an extended monitor via the DVI. In such a multi-display system, all of the liquid crystal display devices can display the screen-saver image in a front-most face. This is because that, according to the present embodiment, the screen-saver image 13 is displayed in front of execution images of all of the other application programs including the HMI application program, as described earlier.

In the present embodiment, an application program whose execution image is displayed on the main desktop DT1 is the HMI application program. However, this is merely one example. Alternatively, such an application program may be any of other application programs, of course.

### [Embodiment 3]

Finally, an embodiment including Embodiments 1 and 2 is described below with reference to Figs. 1 and 4. It should be noted that in the present embodiment, components having the same functions as those explained in Embodiments 1 and 2 are given the same reference signs as those of Embodiments 1 and 2, and descriptions for the components are omitted here.

As illustrated in Fig. 1, an image display control device (PC 1) includes: a desktop display switching section (desktop display management section 11) for causing a display device 20 to display, of a plurality of desktops, a first desktop (main desktop DT1) or a second desktop (sub desktop DT2) by switching between the first desktop and the second desktop, the second desktop being associated with the first desktop; and an application program execution processing section 12 (i) for executing a first application program for the first desktop and a second application program for the second desktop and (ii) displaying a first image on the first desktop and a second image on the second desktop, the first and second images being generated in response to execution of the first and second application programs, respectively, the desktop display switching section switching the first desktop to the second desktop in accordance with a selection instruction (start instruction C1, switching instruction C3) to select the second application program of the second image displayed on the second desktop.

According to the above configuration, in response to the selection instruction, the second desktop is displayed instead of the first desktop, and the second image of the second application program is displayed on the second desktop. Thus, while the second application program is in execution, the image of the second application program is certainly displayed. Therefore, even in a case where an image of another application program is displayed on the first desktop, it is possible to prevent an inconvenience that the application programs cause collision by trying to display their images in a front-most face. Further, it is also possible to prevent an inconvenience that a user erroneously ends another application program which does not need to be ended.

Further, according to the above configuration, merely by carrying out an operation to give the selection instruction while the first desktop is displayed, the image of the application program which is started can be displayed on the second desktop thus switched to be displayed. Thus, it is possible to switch the desktops from one to another without carrying out an operation to switch the desktops.

The image display control device is configured such that: the desktop display switching section switches the second desktop to the first desktop in response to end of display of the second image on the second desktop.

According to the above configuration, in response to the end of the display of the image of the second application program on the second desktop, the process returns to the original state in which the first desktop is displayed. Thus, it is possible to switch desktops from one to another without carrying out an operation to switch the desktops.

As illustrated in Fig. 4, the image display control device (PC 1A) is configured such that the display device 20 is a liquid crystal display device 2 including a touch panel, the second application program is a screen-saver program, the desktop display switching section switches the first desktop to the second desktop upon receipt of, as the selection instruction, an instruction to turn off a backlight 8 provided in the liquid crystal display device 2, the instruction being generated in a case where the touch panel 10 is not touched for a certain time period; the application program execution processing section 12A executes the screen-saver program, so as to cause the second desktop to display a screen-saver image, and the application program execution processing section ends the second application program after (or immediately after) touching to the touch panel carried out while the screen-saver image is displayed is released.

According to the above configuration, when the operation mode is transferred to the power saving mode, in which the backlight is turned off, in a state where the touch panel 10 is not touched for the certain time period, the second desktop is switched from the first desktop and is displayed, and then the screen-saver image is displayed on the second desktop. Further, if the touch panel is touched while the screen-saver image is displayed and then the touching is released, the application program is ended, so that the display of the screen-saver image is ended. Thereafter, as described earlier, the process returns to the original state in which the first desktop is displayed.

Accordingly, in a case where the touch panel 10 is touched while the screen-saver image is displayed, the touching is accepted as an operation for returning from the power saving mode to the usual mode, in which the backlight 8 is turned on, rather than as an operation with respect to the image of another application program displayed on the first desktop. Thus, it is possible to prevent an erroneous operation caused when returning to the usual mode from the power saving mode.

Further, as illustrated in Fig. 4, the image display control device (PC 1A) causes the liquid crystal display device 2 to display an image generated in response to execution of the application program, the liquid crystal display device 2 including (i) the liquid crystal display panel 7 provided with the backlight 8 and (ii) a touch panel 10 stacked on the liquid crystal display panel 7, the image display control device, comprising: a desktop display switching section (desktop display management section 11) for switching, of a plurality of desktops, a first desktop to a second desktop which is associated with the first desktop and displaying the second desktop, in response to turning-off of the backlight 8, the turning-off occurring in a case where the touch panel 10 is not touched for a certain time period; a screen-saver display control section 6 for causing the second desktop to display the screen-saver image; and a backlight control section 5 for recognizing, in a case where the touch panel is touched while the backlight 8 is off and the screen-saver image is displayed, the touching as an instruction to turn on the backlight 8.

According to the above configuration, in a case where the backlight 8 is turned off in a state where the touch panel 10 is not touched for the certain time period, the second desktop is displayed instead of the first desktop, and then the image of the application program, i.e., the screen-saver image is displayed on the second desktop. Thus, while the application program is in execution, the image of the screen-saver program is certainly displayed. Therefore, even in a case where an image of another application program is displayed on the first desktop, it is possible to prevent an inconvenience that the application programs cause collision by trying to display their images in a front-most face. Further, it is also possible to prevent an inconvenience that a user erroneously ends another application program which does not need to be ended.

Further, according to the above configuration, merely by a state where the touch panel 10 is not touched for the certain time period while the first desktop is displayed, it is possible to start the application program and display the screen-saver image on the second desktop thus switched to be displayed. Thus, it is possible to switch the desktops from one to another without carrying out an operation to switch the desktops.

Further, as with the previously-described image display control device, in a case where the touch panel 10 is touched while the screen-saver image is displayed, the touching is accepted as an operation for returning from the power saving mode to the usual mode, in which the backlight 8 is turned on, rather than as an operation with respect to the image of another application program displayed on the first desktop. Thus, it is possible to prevent an erroneous operation caused when returning to the usual mode from the power saving mode.

The image display control device is configured such that, the desktop display switching section switches the second desktop, which is displayed, to the first desktop in response to end of display of the screen-saver image; and the screen-saver display control section 6 ends display of the screen-saver image, immediately after or a certain time period after the touching to the touch panel 10 carried out while the screen-saver image is displayed is released.

According to the above configuration, in a case where a state where the touch panel 10 is not touched again has continued for the certain time period since the touch panel 10 was touched, the application program is ended, so that the process returns to the original state in which the first desktop thus switched is displayed. Thus, it is possible to switch the desktops from one to another without carrying out an operation to switch the desktops.

The image display control device is configured such that, the screen-saver display control section 6 causes the liquid crystal display panel 7 to end the display of the screen-saver image, in a case where a state in which the touch panel 10 is not touched again has continued for a certain time period since the touching to the touch panel 10 was released, the touching being the instruction to turn on the backlight 8.

According to the above configuration, the display of the screen-saver image is ended, in a case where a state in which the touch panel 10 is not touched again since the touching, carried out for returning to the usual mode from the power saving mode, was released. Thus, the display of the screen-saver image is not ended even if chattering occurs instead of proper touching, the chattering being caused by, e.g., the finger touching the touch panel 10 several times in a short time by accident. In this manner, it is possible to prevent an erroneous operation.

In a system including a plurality of liquid crystal display devices 2 each including the liquid crystal display panel, the backlight, and the touch panel, the screen-saver display control section 6 causes each of the liquid crystal display panels 7 to display the screen-saver image, and causes each of the liquid crystal display panels 7 to end display of the screen-saver image.

According to the above configuration, even in a case of a system (multi-display system) including a plurality of liquid crystal display devices 2, all of the liquid crystal display devices 2 can display the screen-saver image in a front-most face.

### [Example realized by software]

The control blocks of the PC 1 and the PC 1A (especially, the touch panel control section 4, the backlight control section 5, the screen-saver display control section 6, the desktop display management section 11, the application program execution processing section 12, and the timing control section 14) may be realized by way of a logical circuit (hardware) provided on an integrated circuit (IC chips) etc., or may be realized by way of software by use of a Central Processing Unit (CPU). In the embodiments described above, the control blocks are realized by way of software.

In the latter case, the PC 1 and the PC 1A each include, for example, (i) a CPU for executing instructions in control programs constituting software which realizes each function, (ii) a Read Only Memory (ROM) or a storage device (the ROM and the storage device are each called "storage medium") for storing the programs and various data in a computer-readable manner (or in a CPU-readable manner), and (iii) a Random Access Memory (RAM) to which the programs are loaded. The objects of the present invention can also be achieved in such a manner that the computer (or the CPU) retrieves and executes the programs contained in the storage medium. The storage medium may be a "non-transitory tangible medium," examples of which encompass tapes, discs, cards, semiconductor memories, and programmable logic circuits. Further, the programs may be delivered to the computer over any transmission medium (e.g., a communications network or a broadcast wave) which is able to transmit the programs. The present invention encompasses data signals which are embodied by electronic transmission of the programs and are embedded in a carrier wave.

Each of the present embodiments has been explained by taking an example where the present invention is applied to the PC 1 or the PC 1A. However, the present invention is not limited to this. Alternatively, it is possible to apply the present invention to a dedicated device including a touch panel, for example, to a programmable display.

### [Supplementary information]

The present invention is not limited to the description of each embodiment above, but may be altered within the scope of the claims. An embodiment based on a combination of technical means properly described in each embodiment is encompassed in the technical scope of the present invention.

### Industrial Applicability

The present invention is suitably applicable to computer equipment for displaying images of different application programs on a plurality of desktops, respectively.

### Reference Signs List

- 1, 1A: PC
- 2: Liquid crystal display device (display device)
- 7: Liquid crystal display panel
- 8: Backlight
- 5: Backlight control section
- 6: Screen-saver display control section
- 11: Desktop display management section (desktop display switching section)
- 12, 12A: Application program execution processing section
- 20: Display device
- C1: Start instruction (selection instruction)
- C3: Switching instruction (selection instruction)
- C3': Switching instruction (selection instruction)
- DT1: Main desktop (first desktop)
- DT2: Sub desktop (second desktop)
- I1: HMI image (first image)
- I2: PDF image (second image)
- I3: Screen-saver image

## Claims

1. An image display control device, comprising:
a desktop display switching section for causing a display device to display, of a plurality of desktops, a first desktop or a second desktop by switching between the first desktop and the second desktop, the second desktop being associated with the first desktop; and
an application program execution processing section for (i) executing a first application program for the first desktop and a second application program for the second desktop and (ii) displaying a first image on the first desktop and a second image on the second desktop , the first and second images being generated in response to execution of the first and second application programs, respectively, the desktop display switching section switching the first desktop to the second desktop in accordance with a selection instruction to select the second application program of the second image displayed on the second desktop.

2. The image display control device according to claim 1, wherein the desktop display switching section switches the second desktop to the first desktop in response to end of display of the second image on the second desktop.

3. The image display control device according to claim 1, wherein: the display device is a liquid crystal display device including a touch panel;
the second application program is a screen-saver program;
the desktop display switching section switches the first desktop to the second desktop upon receipt of, as the selection instruction, an instruction to turn off a backlight provided in the liquid crystal display device, the instruction being generated in a case where the touch panel is not touched for a certain time period; the application program execution processing section executes the screen-saver program, so as to cause the second desktop to display a screen-saver image, and the application program execution processing section ends the second application program after touching to the touch panel carried out while the screen-saver image is displayed is released.

4. An image display control device which causes a liquid crystal display device to display an image generated in response to execution of an application program, the liquid crystal display device including (i) a liquid crystal display panel provided with a backlight and (ii) a touch panel stacked on the liquid crystal display panel, said image display control device, comprising:
a desktop display switching section for switching, of a plurality of desktops, a first desktop to a second desktop which is associated with the first desktop and displaying the second desktop, in response to turning-off of the backlight, the turning-off occurring in a case where the touch panel is not touched for a certain time period;
a screen-saver display control section for causing the second desktop to display a screen-saver image; and
a backlight control section for recognizing, in a case where the touch panel is touched while the backlight is off and the screen-saver image is displayed, the touching as an instruction to turn on the backlight.

5. The image display control device according to claim 4, wherein:
the desktop display switching section switches the second desktop, which is displayed, to the first desktop in response to end of display of the screen-saver image; and
the screen-saver display control section ends display of the screen-saver image, immediately after or a certain time period after the touching to the touch panel is released while the screen-saver image is displayed.

6. The image display control device according to claim 4 or 5, wherein:
in a system including a plurality of liquid crystal display devices each including the liquid crystal display panel, the backlight, and the touch panel, the screen-saver display control section causes each of the liquid crystal display panels to display the screen-saver image, and causes each of the liquid crystal display panels to end display of the screen-saver image.
